# EUROPEAN PATENT SPECIFICATION

(11) **EP 0 427 393 B1**
(45) Date of publication and mention of the grant of the patent: **19.01.1994**
(21) Application number: 90310983.3
(22) Date of filing: 08.10.1990
(51) Int. Cl.: B60K 15/00, F02M 37/00

(54) **Purging air from a fuel line**
Luftablassvorrichtung für Kraftstoffleitung
Système de purge d'air pour un conduit de carburant

(30) Priority: 04.11.1989 GB 8924940
(43) Date of publication of application: 15.05.1991
(73) Proprietor: FORD MOTOR COMPANY LIMITED, Brentwood Essex (GB); FORD FRANCE S. A., 92506 Rueil-Malmaison Cédex (FR); FORD-WERKE AKTIENGESELLSCHAFT, 50725 Köln (DE); FORD MOTOR COMPANY, Dearborn, MI 48120 (US)
(72) Inventor: Stalker, George Carlton, Canewdon, Rochford, Essex (GB); Turner, David Brian, Springfield, Chelmsford, Essex (GB)
(74) Representative: Messulam, Alec Moses

(56) References cited:
- US-A- 1 132 273
- US-A- 1 432 714
- US-A- 1 477 317
- US-A- 4 029 067
- US-A- 4 848 717

## Description

### FIELD OF THE INVENTION

This invention relates to the purging of air from a fuel line, and in particular to a method of purging and to an air purging device for use in a fuel line. The invention is particularly applicable to an air purging operation carried out on a vehicle at the time of construction of the vehicle, before the engine is first started in the vehicle.

### BACKGROUND TO THE INVENTION

In order to draw the first charge of fuel from the fuel tank to the engine through the initially air-filled fuel lines, it is conventional to crank the engine so that the fuel pump draws the air out of the fuel lines. Once all the air has been pumped out, the fuel follows. However purging the air in this way takes time, in particular because the fuel pump is not designed to pump air and is not very efficient at pumping air. It is desirable to find a way in which the air can be purged from the fuel circuit more quickly than before.

### SUMMARY OF THE INVENTION

According to a first aspect of the invention, there is provided a method of purging a fuel line which extends from a fuel tank to a fuel consuming unit (eg an engine), the method comprising the steps of connecting a vacuum pump to an air outlet from the line, evacuating air from the line, plugging the air outlet whilst the vacuum in the line is maintained, and subsequently removing the vacuum pump from the line.

Preferably the vacuum pump continues to run until the air outlet has been plugged.

Since the method set out above is intended for use only at the time when the vehicle is first assembled, on a production line, the plugging of the air outlet is preferably permanent.

Evacuation of the air from the line is preferably continued until liquid fuel is sensed at the air outlet.

The air outlet is preferably positioned in the fuel line as close as possible to the fuel consumer unit and upstream of any filter in the line.

Where the method is carried out on a vehicle production line, the vacuum pump can be positioned alongside the line with a vacuum head for sealing connection to the air outlet.

According to a second aspect of the invention there is provided an air purge device to be fitted in a fuel line for carrying out the method set forth above the device including a fuel flow passage to allow passage of fuel along the line and through the device, an air outlet adapted to be connected to a vacuum pump and communicating with the fuel flow passage and a moveable plug adapted to be moved to close the air outlet.

Preferably the device includes a spigot at each end of the fuel flow passage, the spigots being designed to have fuel pipes connected to them. The air outlet preferably leads into a space between the spigots and is formed by a hollow tubular body onto which a vacuum head can be connected.

The moveable plug can be pre-mounted in the air outlet in a position in which it does not obstruct the air outlet but can be moved axially once evacuation is complete to a position where it does close the air outlet.

### BRIEF DESCRIPTION OF THE DRAWINGS

The invention will now be further described, by way of example, with reference to the accompanying drawings, in which:
Figure 1 is a schematic illustration of the fuel system of a motor vehicle:
Figure 2 is a perspective view of an air purge device in accordance with the invention; and
Figures 3, 4 and 5 illustrate three different stages in the method of the invention.

### DESCRIPTION OF PREFERRED EMBODIMENTS

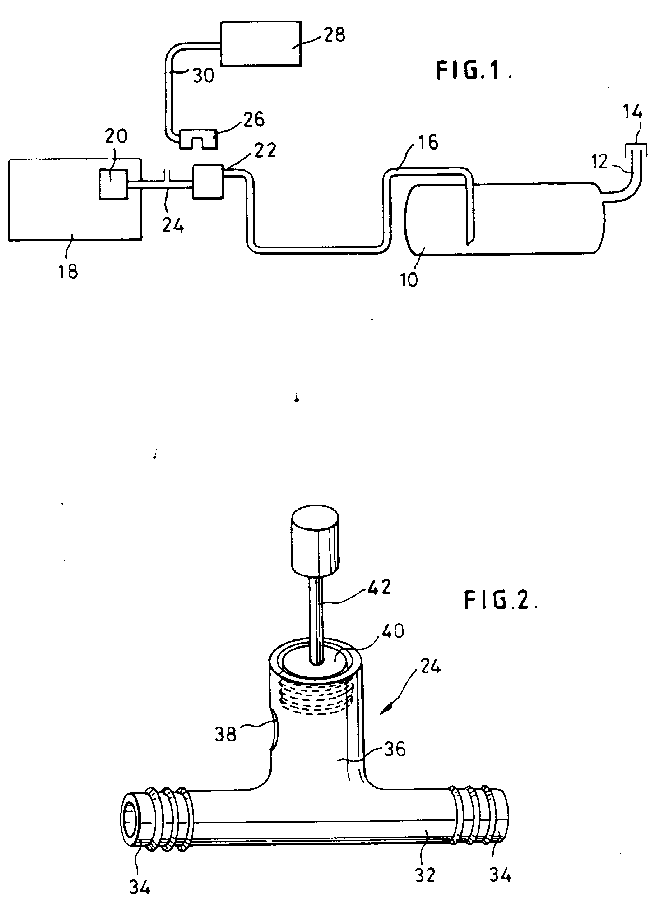

Figure 1 shows a fuel tank 10 with a filler pipe 12 and a cap 14. A fuel feed line 16 leads from the tank towards an engine 18. The engine (which in this case is a diesel engine) has a fuel pump 20 which draws fuel from the tank 10 through a filter 22 to the engine. The invention can however also be applied to a petrol engine.

When the vehicle is first assembled, the engine is installed, the tank is installed and the fuel line which connects the two is installed. At this stage the fuel line is completely filled with air and before fun from the tank 10 can reach the engine, this air has to be purged from the system. As has already been pointed out, it is possible to purge this air by operation of the pump 20 which can be achieved by cranking the engine using an external power source. However it takes an appreciable period of time for the pump to purge the volume of air which is present.

To overcome this difficulty, the invention provides for the use of an air purge device 24 which is positioned in the fuel pipe 16 close to the fuel pump 20. The device 24 has an air outlet which mates with a vacuum head 26 connected to a vacuum pump 28 by a flexible pipe 30. When the head 26 is engaged with the device 24, the vacuum pump 28 draws the air out of the line 16and out of the filter 22, and draws fuel from the tank 10 through the pipe and through the filter practically up to the engine. Thereafter the engine will fire without delay when it is initally cranked over.

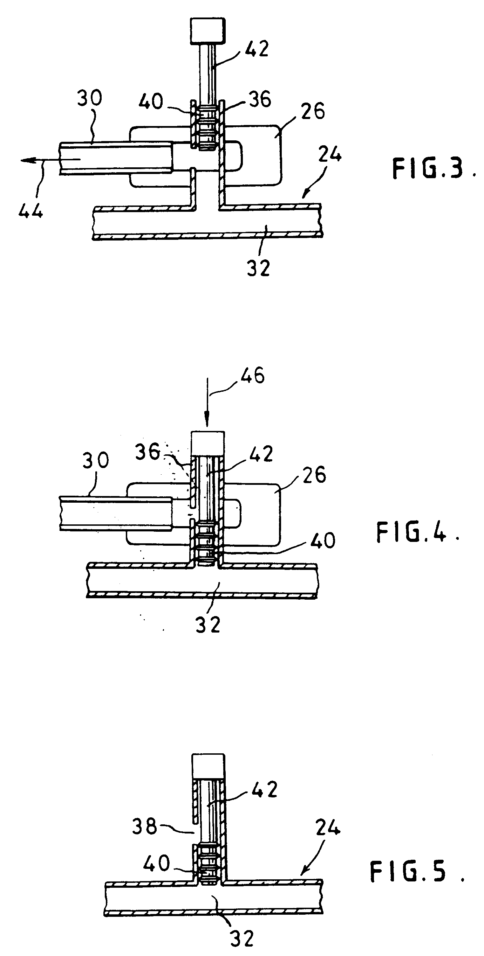

The detail of the device 24 is shown in Figure 2 by way of example. There is a fuel passage 32 through the device which ends in fuel line connection spigots 34 at each end. These have conventional annularly ridged exteriors to retain the ends of the fuel lines. The air outlet is via a cylindrical portion 36 which communicates with the passage 32 and via a circular aperture 38. A plug 40 on the end of a stem 42 is fitted, initially at the top of the cylinder 36 in a position where it closes the top end of the cylinder but allows communication between the air outlet and the fuel passage. The plug can however be pushed down the cylinder 36 as will be described now with reference to Figures 3, 4 and 5.

Figure 3 shows the vacuum head 26 fitted off the air outlet of the device 24, and the arrow 44 indicates air being evacuated from the fuel passage 32 and from the remainder of the fuel line 16. As the air is evacuated, fuel will be sucked from the tank 10 and will flow through the device and into the pipe 30. As soon as fuel is present in the pipe 30, sufficient evacuation of the line 16 has taken place and the plug 40 is then forced downwards in the direction of the arrow 46 (Figure 4) so that it blocks the air outlet. Fuel now flows only along the passage 32.

It is important that the downward movement of the plug 40 is carried out at a time when the head 26 is still connected to the device, and whilst the vacuum is maintained. The fuel line will then be full of fuel up to the mid point of the passage 32, and when the engine is turned over there is only a minimal volume of air which has to be drawn through the engine before fuel reaches the cylinders.

The final stage in the process is the removal of the vacuum head 26 leaving the closed air purge device which remains as a permanent part of the vehicle and will not thereafter be disturbed.

The vacuum pump 28 with its vacuum head 26 is mounted alongside the assembly line so that as each vehicle moves along the assembly line, the fuel line can be purged and then sealed so that at any time thereafter the engine can be started without delay.

The invention thus provides a simple device and operating method by which air can be purged, leaving two significant reductions in assembly line time.

The head 26 can be constructed in such a way that it senses the arrival of liquid fuel in the pipe 30 and then automatically forces home the plug 40 without any separate operator input.

## Claims

1. A method of purging a fuel line (16) which extends from a fuel tank (10) to a fuel consuming unit (18), the method being characterised by the steps of connecting a vacuum pump (28) to an air outlet (38) from the line, evacuating air from the line, plugging the air outlet whilst the vacuum in the line is maintained, and subsequently disconnecting the vacuum pump from the line.

2. A method as claimed in Claim 1, characterised in that the air outlet (38) is positioned in the fuel line (16) as close as possible to the fuel consuming unit (18) and upstream of any filter (22) in the line.

3. An air purge device to be fitted in a fuel line for carrying out the method claimed in Claim 1 or Claim 2, the device (24) including a fuel flow passage (32) which allows passage of fuel along the line and through the device, an air outlet (38) adapted to be connected to a vacuum pump and communicating with the fuel flow passage and a moveable plug (40) adapted to be moved to close the air outlet.

4. A device as claimed in Claim 3, which includes a spigot (34) at each end of the fuel flow passage (32), the spigots being designed to have fuel pipes connected to them.

5. A device as claimed in Claim 3 or Claim 4, characterised in that the air outlet (38) leads into a space between the spigots (34) and is formed by a hollow tubular body (36) onto which a vacuum head (26) of a vacuum pump (28) can be connected.

6. A device as claimed in Claim 5, characterised in that the moveable plug (40) is premounted in the tubular body (36) in a position in which it does not obstruct the air outlet (38) but can be moved axially once evacuation is complete to a position where it does close the air outlet (38).

7. A motor vehicle having an engine (18), a fuel tank (10), a fuel line (16) connecting the engine and the tank and an air purge device as claimed in any one of Claims 4 to 6 included in the fuel line.

## Patentansprüche

1. Verfahren zur Entlüftung einer Kraftstoffleitung (16), welche von einem Kraftstoffbehälter (10) zu einer Verbrauchereinheit (18) führt, wobei das Verfahren durch folgende Schritte gekennzeichnet wird: Anschließen einer Vakuumpumpe (28) an eine Luftauslaßöffnung (38) der Kraftstoffleitung, Abpumpen der Luft aus der Leitung, Verschließen der Luftauslaßöffnung während das Vakuum in der Leitung aufrechterhalten wird und anschließendes Abmontieren der Vakuumpumpe von der Leitung.

2. Verfahren nach Anspruch 1, dadurch gekennzeichnet, daß die Luftauslaßöffnung (38) in der Kraftstoffleitung (16) so nahe wie möglich an die Verbrauchereinheit (18) und oberhalb jeglichen Filters (22) in der Leitung angeordnet ist.

3. Entlüftungsvorrichtung zur Einpassung in eine Krafststoffleitung für die Durchführung des Verfahrens nach Anspruch 1 und 2, wobei die Vorrichtung (24) einen Kraftstoffdurchlaß (32) beinhaltet, der den Kraftstofffluß durch die Leitung und die Vorrichtung ermöglicht, eine Luftauslaßöffnung (38), die so ausgelegt ist, daß sie an eine Vakuumpumpe angeschlossen werden kann und Verbindung mit dem Kraftstoffdurchlaß hat, sowie einen beweglichen Stopfen (40), der zum Verschluß der Luftauslaßöffnung bewegt werden kann.

4. Vorrichtung nach Anspruch 3, welche an jedem Ende des Kraftstoffdurchlasses (32) eine Muffe (34) beinhaltet, wobei die Muffen für den Anschluß von Kraftstoffleitungen ausgelegt sind.

5. Vorrichtung nach Anspruch 3 und 4, dadurch gekennzeichnet, daß die Luftauslaßöffnung (38) in einen Raum zwischen den Muffen (34) führt und von einem hohlen, röhrenförmigen Hauptstück (36) gebildet wird, an welchem ein Vakuumkopf (26) einer Vakuumpumpe (28) angeschlossen werden kann.

6. Vorrichtung nach Anspruch 5, dadurch gekennzeichnet, daß der bewegliche Stopfen (40) in das röhrenförmige Hauptstück (36) vormontiert wird, und zwar in einer Position, in welcher er die Lauftauslaßöffnung (38) nicht versperrt, in welcher er aber nach Abschluß des Pumpvorgangs axial zum Verschließen der Luftauslaßöffnung (38) bewegt werden kann.

7. Kraftfahrzeug mit einem Motor (18), Kraftstofftank (10), Kraftstoffleitung (16), welche den Motor mit dem Tank verbindet, und Entlüftungsvorrichtung in der Kraftstoffleitung nach Ansprüchen 4 bis 6.

## Revendications

1. Méthode pour purger une conduite de carburant (16) s'étendant d'un réservoir à essence (10) à une unité de consommation de carburant (18), la méthode étant caractérisée par les étapes suivantes : connexion d'une pompe à vide sur une sortie d'air (38) partant de la conduite, évacuation de l'air de la conduite, obturation de la sortie d'air pendant que le vide est maintenu dans la conduite, et subséquemment déconnexion de la pompe à vide de la conduite.

2. Méthode selon la revendication 1, caractérisée en ce que la sortie d'air (38) est placée dans la conduite de carburant (16) aussi près que possible de l'unité de consommation de carburant (18) et en amont de tout filtre (22) dans la conduite.

3. Dispositif pour purger l'air à installer dans une conduite de carburant pour appliquer la méthode selon la revendication 1 ou 2, le dispositif (24) incluant un conduit d'écoulement du carburant (32) qui permet l'écoulement du carburant le long de la conduite et à travers le dispositif, une sortie d'air (38) adaptée pour être reliée à une pompe à vide et communiquant avec le conduit d'écoulement de carburant et un bouchon amovible (40) adapté pour être déplaçable de façon à fermer la sortie d'air.

4. Dispositif selon la revendication 3, qui inclut un goujon (34) à chaque extrémité du conduit d'écoulement du carburant (32), les goujons étant destinés à être reliés à des conduites de carburant.

5. Dispositif selon la revendication 3 ou 4, caractérisé en ce que la sortie d'air (38) mène à un espace entre les goujons (34) et est formée par un corps tubulaire creux (36) sur lequel une tête à vide (26) d'une pompe à vide (28) peut être fixée.

6. Dispositif selon la revendication 5, caractérisé en ce que le bouchon amovible (40) est préalablement monté dans le corps tubulaire (36) dans une position dans laquelle il n'obstrue pas la sortie d'air (38) mais peut être bougé axialement une fois l'évacuation terminée à une position dans laquelle il ferme la sortie d'air (38).

7. Véhicule à moteur présentant un moteur (18), un réservoir à essence(10), une conduite de carburant (16) reliant le moteur et le réservoir, et un dispositif pour purger l'air selon l'une des revendications 4 à 6 inclus dans la conduite de carburant.
